## Europäisches Patentamt

(19) **European Patent Office**

**Office européen des brevets**

(11) Veröffentlichungsnummer: **0 036 124 B1**

(12) **EUROPÄISCHE PATENTSCHRIFT**

(45) Veröffentlichungstag der Patentschrift:
**11.07.84**

(21) Anmeldenummer: **81101509.8**

(22) Anmeldetag: **03.03.81**

(51) Int. Cl.³: **A 23 L 3/22**, A 23 C 3/033

(54) Vorrichtung für eine die Haltbarkeit erhöhende Wärmebehandlung, insbesondere Ultrahocherhitzung, von Keime enthaltenden Produkten.

(30) Priorität: **15.03.80 DE 3010013**

(43) Veröffentlichungstag der Anmeldung:
**23.09.81 Patentblatt 81/38**

(45) Bekanntmachung des Hinweises auf die Patenterteilung:
**11.07.84 Patentblatt 84/28**

(84) Benannte Vertragsstaaten:
**FR GB IT NL SE**

(56) Entgegenhaltungen:
**CH - A - 205 147**
**CH - A - 404 377**
**DE - A - 1 617 968**
**GB - A - 20 634**
**US - A - 2 158 809**

(73) Patentinhaber: **Finnah, Josef, Alheidisstrasse 19, D-4422 Ahaus (DE)**

(72) Erfinder: **Finnah, Josef, Alheidisstrasse 19, D-4422 Ahaus (DE)**

(74) Vertreter: **Busse & Busse Patentanwälte, Postfach 1226 Grosshandelsring 6, D-4500 Osnabrück (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Vorrichtung für eine die Haltbarkeit erhöhende Wärmebehandlung, insbesondere Ultrahocherhitzung, von Keime enthaltenden Produkten gemäss dem Oberbegriff des Patentanspruchs 1.

Bei einer bekannten Vorrichtung dieser Art (DE-A-1 617 968) ist für jede Behandlungszone, z.B. die Zone der Vorerwärmung, der Hocherhitzung, der Abkühlung usw., jeweils ein Wärmetauscher vorgesehen, dessen Wärmeaustauschkapazität bei Betrieb der Vorrichtung dem zu behandelnden Produkt exakt jenen Temperaturverlauf vorgibt, wie es in den einzelnen Behandlungszonen auslegungsgemäss erwünscht ist. Die hintereinander geschalteten Wärmetauscher sind dabei für einen Betrieb mit einem Produktdurchsatz bemessen, der durch die Auslegung der Vorrichtung für ein bestimmtes Produkt festgelegt und unverändert aufrechtzuerhalten ist, um dem Produkt, das in sie mit festgelegter Einlauftemperatur eintritt, die auslegungsgemässe Endtemperatur der zugehörigen Behandlungszone zu vermitteln. Die je für eine Behandlungszone vorgesehenen Wärmetauscher werden sämtlich vom zu behandelnden Produkt in vorgegebener Reihenfolge durchströmt und sichern dem Produkt einen stets gleichen Weg durch das Gesamtsystem.

Es ist ferner eine Vorrichtung zur Wärmebehandlung von Milch bekannt (US-A-2 158 809), bei der zur Pasteurisierung von Milch eine einzige Wärmetauschereinheit Anwendung findet, die aus neun parallel übereinander angeordneten Zweirohr-Wärmetauscherteileinheiten besteht, die jeweils endseitig durch Rohrverbindungen hintereinander geschaltet sind. Bei dieser bekannten Vorrichtung übernimmt der Wärmetauscher ohne Unterteilung in besondere Behandlungszonen die Temperaturbehandlung der Milch, wobei als Wärmetauschermedium ein Gemisch aus Wasser und Dampf Verwendung findet. Der Dampf wird in das Wasser injiziert, und mit Hilfe der Veränderung der injizierten Dampfmenge kann die Endtemperatur der die Vorrichtung verlassenden Milch variiert werden. Auch bei dieser Vorrichtung sind dem Produkt und dem Wärmeträgermedium feste Wege vorgegeben, und die Vorrichtung erfordert für einen ordnungsgemässen Behandlungsablauf einen Betrieb mit auslegungsgemäss festgelegter und aufrechterhaltener Durchsatzmenge für das Produkt.

Dies gilt auch für eine weiterhin bekannte Vorrichtung (CH-A-404 377), die einen Zweirohr-Wärmetauscher in Rohrserpentinenform veranschaulicht, der in der Praxis neben Plattenaustauschern bevorzugt zur Anwendung gelangt. Auch ein solcher Rohrserpentinenaustauscher bildet eine unveränderliche Baueinheit, die zur Erzielung eines gewünschten vorgegebenen Behandlungsablaufes nur mit auslegungsgemässen Durchsatzmengen betreibbar ist.

Bei einer weiterhin bekannten Vorrichtung zur Wärmebehandlung von Milch (GB-A-20 634 AD 1911) ist ein Wärmetauscher für alle Behandlungszonen vorgesehen, der aus zwei übereinander angeordneten, durch Rohrverbindungen hintereinander geschalteten Rohrbündeltauschern besteht. Auch eine derartige Vorrichtung ist nur für einen Betrieb mit auslegungsgemässen Durchsatzmengen geeignet sowie lediglich in der Lage, dem zu behandelnden Produkt ein und denselben Behandlungsverlauf vorzugeben.

Schliesslich ist eine Vorrichtung zum Pasteurisieren von Flüssigkeiten bekannt (CH-A-205 147), bei der der Wärmetauscher als Plattentauscher ausgebildet und in Gruppen unterteilt ist, die gewünschten Behandlungszonen entsprechen. Diese zumindest teilweise mit einem Wärmeaustauschprodukt gegen Produkt ohne Wärmeträgermedium arbeitende Vorrichtung ist für einen auslegungsgemässen Betrieb ausgestaltet, wenngleich es bei Plattentauschern, die gegenüber Rohrserpentinenaustauschern den Vorteil einer wesentlich kompakteren Bauweise geniessen, bekannt ist, eine Austauschereinheit durch Hinzufügen von Platten bzw. durch Ausbau von Platten in begrenztem Umfange in ihrer Kapazität zu verändern. Im Gegensatz zu Rohrserpentinenaustauschern gilt dies generell auch für Rohrbündeltauscher, bei denen es bekannt ist, zur Veränderung des Temperaturverlaufes den Strömungsweg für das Produkt durch Hinzufügen von Teileinheiten zu vergrössern.

Der Erfindung liegt demgegenüber die Aufgabe zugrunde, eine Vorrichtung nach dem Oberbegriff des Patentanspruchs 1 zu schaffen, die bei grosser baulicher Einfachheit und kompakter Bauweise die Möglichkeit eröffnet, die Vorrichtung schnell und einfach auch an grosse Veränderungen der Betriebsbedingungen anpassen zu können, wobei solche Anpassungen ohne nennenswerte Betriebsunterbrechungen ausführbar sein sollen, und die unter Verkürzung der Behandlungszeit für das Produkt eine verbesserte Energiebilanz erbringt.

Diese Aufgabe löst die Erfindung mit den im kennzeichnenden Teil des Patentanspruchs 1 angegebenen Merkmalen. Hinsichtlich weiterer Ausgestaltungen wird auf die Patentansprüche 2 und 3 verwiesen.

Die Vorrichtung nach der Erfindung verwirklicht mit ihrem Prinzip der Unterteilung der Wärmetauscher in eine grosse Vielzahl von einzelnen, wärmetechnisch kleinen Wärmetauscherteileinheiten eine Konzeption, die nicht länger mehr an eine auf einen bestimmten Behandlungsfall abgestimmte Auslegung voraussetzt, sondern in sich eine solche Fülle von Variationsmöglichkeiten einschliesst, dass mit ein und derselben Vorrichtung nicht nur eine auslegungsgemässe Durchsatzhöchstmenge für ein Produkt, sondern auch Bruchteile einer auslegungsgemässen Höchstmenge behandelt werden können. Dabei erschliesst die Vorrichtung nicht nur die Möglichkeit zur Durchsatzmengenveränderung, sondern auch die Möglichkeit, grosse Veränderungen im Temperatur/Zeit-Verlauf vornehmen zu können, so dass die Vorrichtung wechselnden Produkten im jeweiligen Behandlungsablauf optimal angepasst werden kann. Der mit der Vorrichtung durchführbare Teillastbetrieb macht die Vorrichtung zugleich für eine Behandlung von verschiedenen Produkten gleichzeitig einsetzbar, so dass die Vorrichtung, sei es in Molkereibetrieben, sei es in anderen Betrieben, an alle jeweils vorliegenden Betriebswünsche schnell und einfach anpassbar ist, Hierzu genügt es, aus der Vielzahl zur Verfügung stehender Wärmetauscherteileinheiten Gruppen auszuwählen und durch einfaches Zusammenschalten durch austauschbare Leitungen zu einer Teilvorrichtung zusammenzuschliessen, welche den jeweiligen Mengendurchsatz- bzw.
Temperatur/Zeit-Verlaufsanforderungen    gerecht
wird. Dabei ist die Vorrichtung baulich ausserordentlich einfach, erbringt eine vorügliche Energiebilanz
und belässt es ihrem Betreiber, schnell und einfach
Reinigungs- und Wartungsarbeiten durchzuführen,
da bei fortlaufendem Teillastbetrieb Bereiche der
Vorrichtung zu diesen Zwecken stillegbar sind.

Die Wärmetauscherteileinheiten bilden in ihrer
Ausbildung als Rohrbündeltauscher für sich bekannte, preisgünstig in Serie herstellbare Bauteile, die ohne weiteres mit hohem Druck betrieben werden können, nicht nur für leichtflüssige, sondern auch für
zähflüssige Produkte einsetzbar sind, eine klare,
Reinfektionen vermeidende Trennung zwischen den
Strömungskanälen gewährleisten und besonders bei
der speziellen Gestaltung nach den Patentansprüchen 2 und 3 einen ungewöhnlich hohen Austauschwirkungsgrad erbringen.

In der Zeichnung ist ein Ausführungsbeispiel einer
Vorrichtung nach der Erfindung schematisch näher
veranschaulicht. Im einzelnen zeigen:

Fig. 1 eine schematische Stirnansicht einer erfindungsgemässen Vorrichtung,

Fig. 2 einen Längsschnitt durch eine Wärmetauscherteileinheit,

Fig. 3 einen schematischen Querschnitt zu Fig. 2,

Fig. 4 eine Schnittdarstellung ähnlich Fig. 2 in Vergrösserung,

Fig. 5 eine Querschnittdarstellung zu Fig. 4,

Fig. 6 eine Teilschnittdarstellung einer abgewandelten Ausführung einer Wärmetauscherteileinheit
nach Fig. 4,

Fig. 7 ein Temperatur/Zeit-Diagramm der Wärmebehandlung eines Produktes bei Betrieb der Vorrichtung mit voller, auslegungsgemässer Durchsatzleistung von 6000 l/h,

Fig. 8 ein Schaltschema der Wärmetauscherteileinheiten bei einer Produktbehandlung gemäss dem
Diagramm nach Fig. 7,

Fig. 9 den ersten Teil, und

Fig. 10 den zweiten Teil eines Fliessschemas für
den Betrieb der Vorrichtung unter den Bedingungen
des Diagramms nach Fig. 7,

Fig. 11 ein Diagramm ähnlich Fig. 7 bei Betrieb der
Vorrichtung mit einer auf 4000 l/h reduzierten
Durchsatzleistung,

Fig. 12 ein Schaltschema ähnlich Fig. 8 für den Betrieb der Vorrichtung unter den Betriebsbedingungen
des Diagramms nach Fig. 11,

Fig. 13 den ersten Teil, und

Fig. 14 den zweiten Teil eines Fliessschemas ähnlich Fig. 9 und 10 für die Vorrichtung nach Fig. 12 bei
Betrieb unter den Bedingungen des Diagramms nach
Fig. 11,

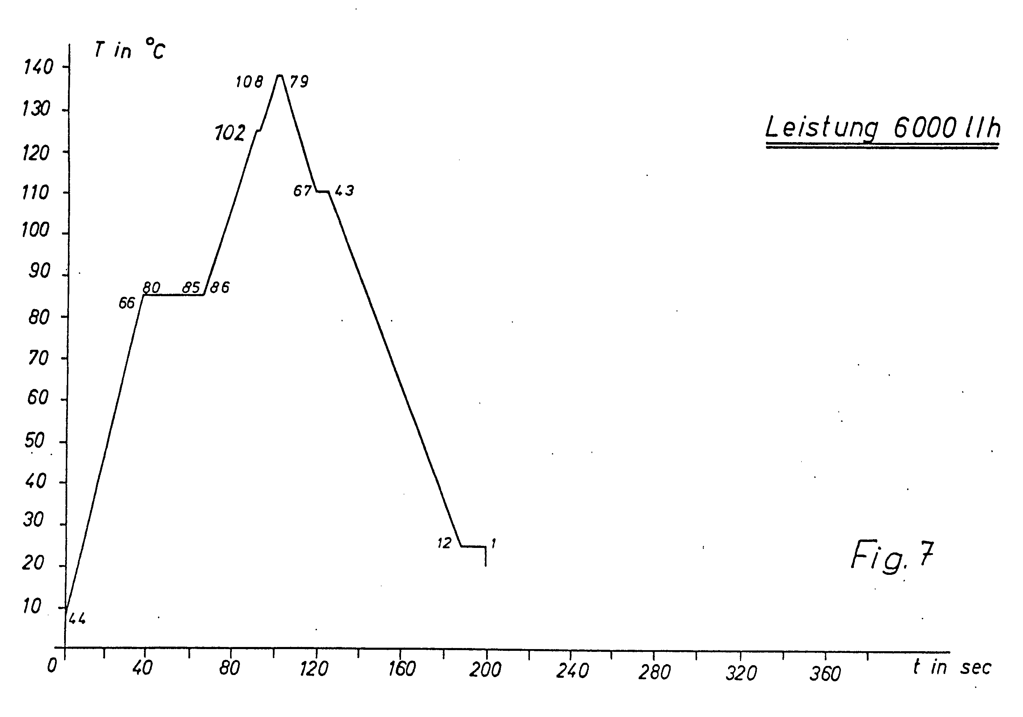

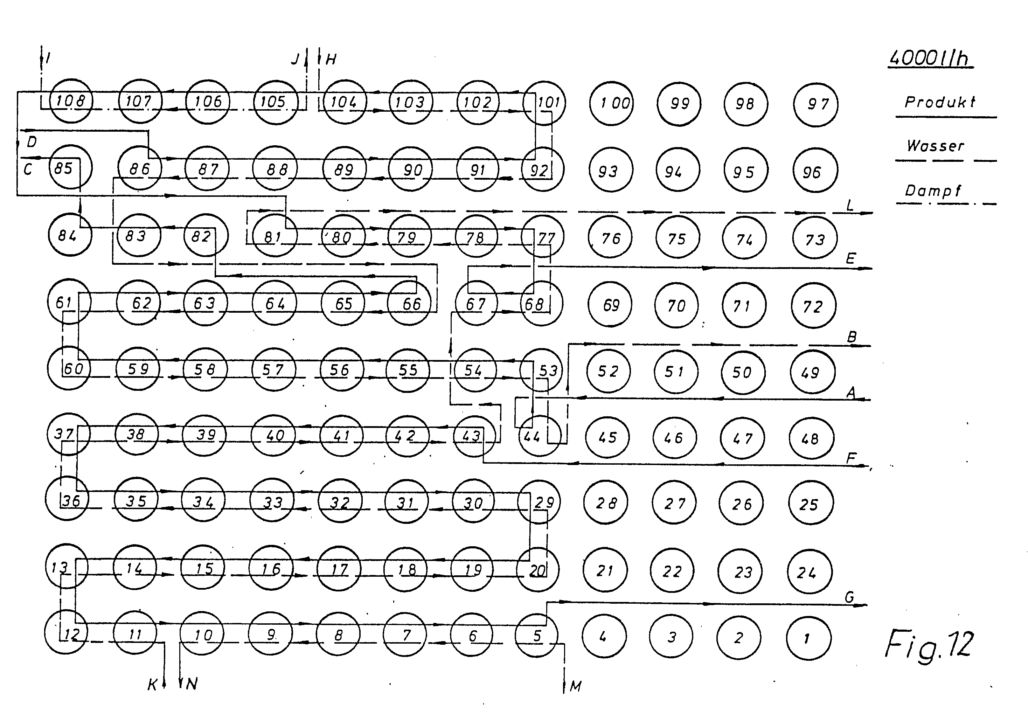

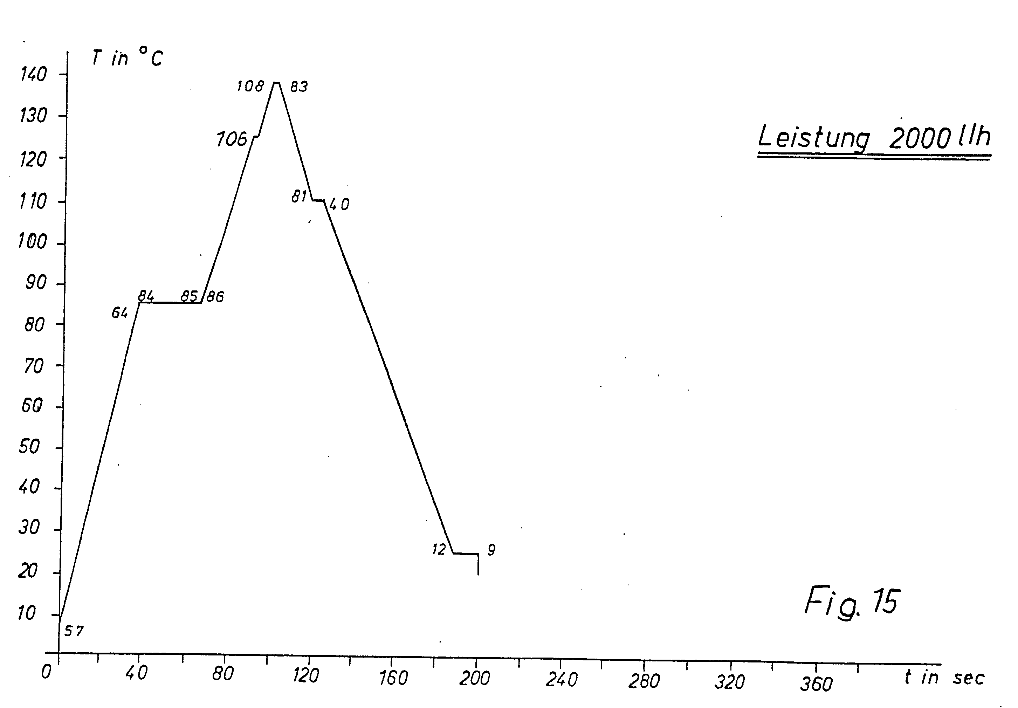

Fig. 15 ein Diagramm ähnlich Fig. 7 und 11 bei Betrieb der Vorrichtung mit einer auf 2000 l/h reduzierten Durchsatzleistung,

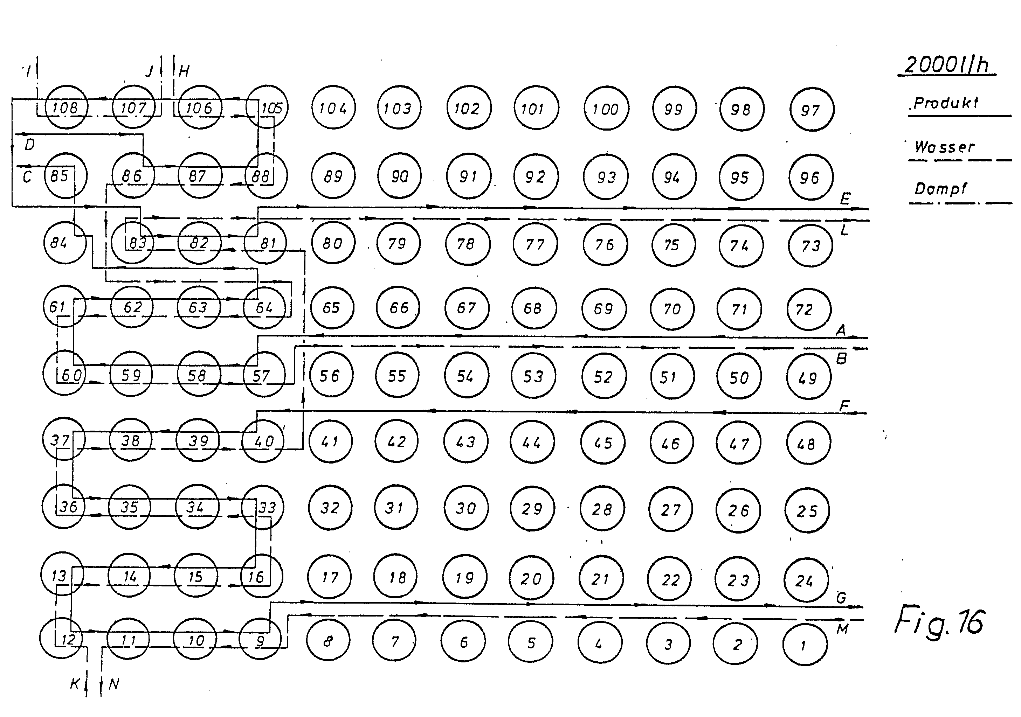

Fig. 16 ein Schaltschema der Wärmetauscherteileinheiten für eine Produktbehandlung gemäss dem
Diagramm nach Fig. 15,

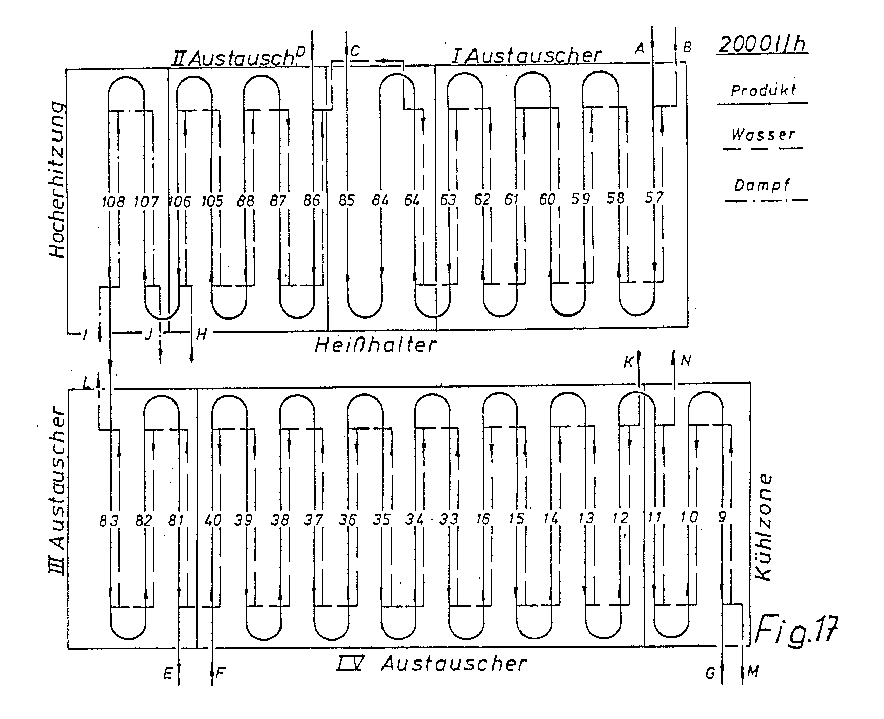

Fig. 17 ein Fliessschema für den Betrieb der Vorrichtung unter den Bedingungen des Diagramms
nach Fig. 15,

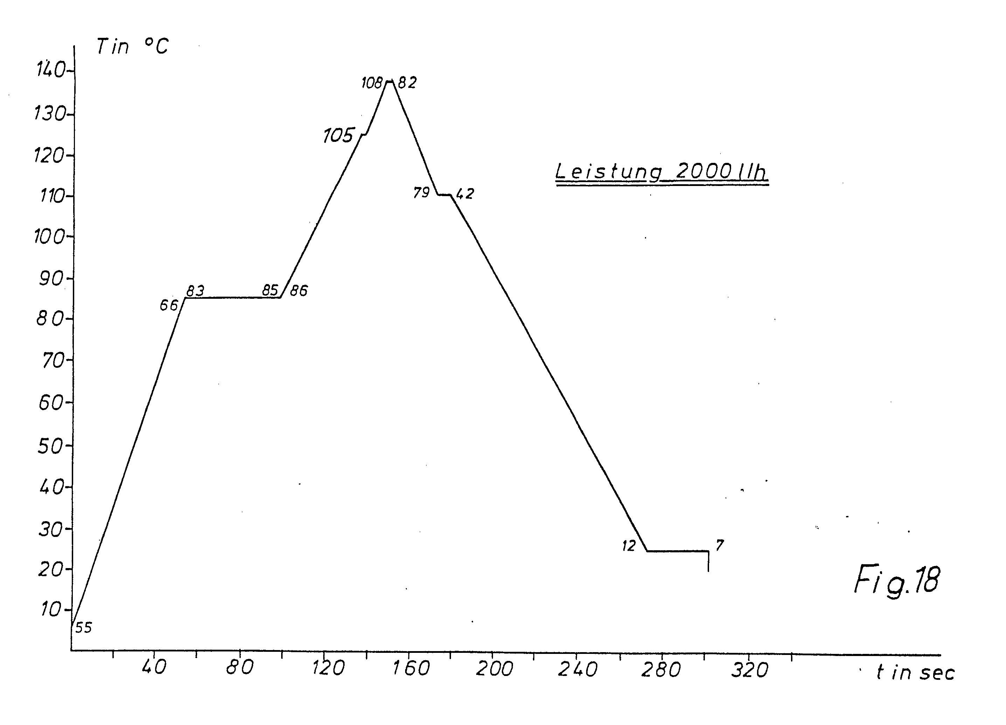

Fig. 18 ein Diagramm ähnlich Fig. 15 zur Veranschaulichung eines bei gleichem Durchsatz veränderten Verlaufs der Temperatur/Zeit-Kurve,

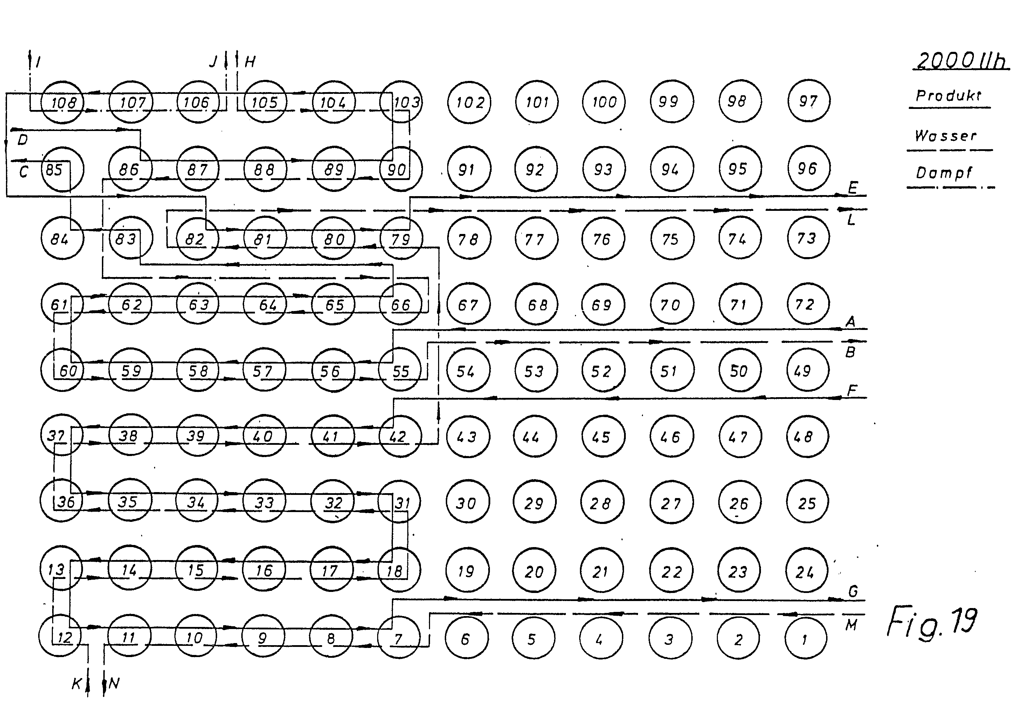

Fig. 19 ein Schaltschema für den Betrieb der Vorrichtung unter den Betriebsbedingungen des Diagramms nach Fig. 18,

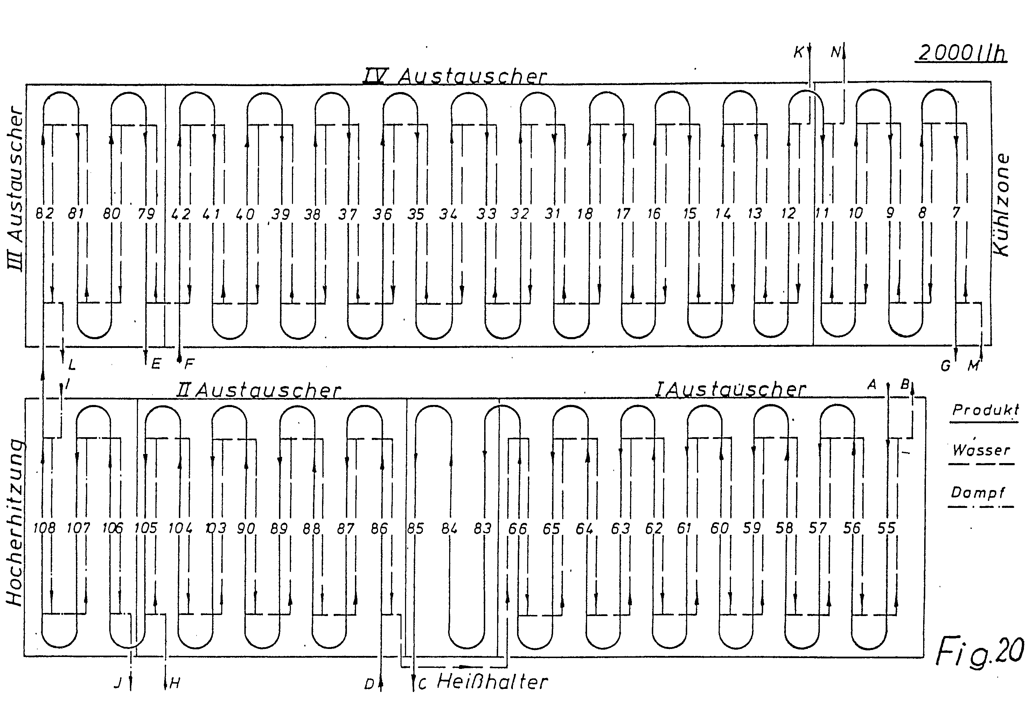

Fig. 20 ein Fliessschema zu Fig. 18 und 19.

Das dargestellte Beispiel einer Vorrichtung nach
der Erfindung wird nachfolgend der Einfachheit halber in Verbindung mit der Wärmebehandlung von
Milch als Behandlungsprodukt beschrieben. Als Wärmeträgermedien finden Wasser bzw. Dampf Anwendung. Es versteht sich, dass sowohl das Produkt, als
auch die Wärmeträgermedien zweckentsprechend
gegen andere Produkte bzw. andere Medien austauschbar sind.

Die in den Zeichnungen veranschaulichte Vorrichtung bildet einen Wärmetauscher aus 108 Wärmetauscherteileinheiten, die in den diese wiedergebenden Figuren mit den Ziffern 1 bis 108 beziffert sind.
Im nachfolgenden wird für den Ausdruck Wärmetauscherteileinheit die Kurzform WTE verwendet und
bei Bezugnahme auf eine bestimmte Wärmetauscherteileinheit der Bezugsziffer diese Abkürzung
hinzugesetzt, z.B. WTE 17 usw.

In den Zeichnungen werden Buchstaben verwendet, welche nachstehende Bedeutung haben:

A    Milcheintritt,
B    Wasseraustritt (Vorlauf),
C    Milchaustritt zur Homogenisiervorrichtung,
D    Milcheintritt von der Homogenisiervorrichtung,
E    Milchaustritt zum Entgaser,
F    Milcheintritt vom Vergaser,
G    Milchaustritt zu den Abfüllmaschinen,
H    Wassereintritt (Vorlauf),
I    Dampfeintritt
J    Dampfaustritt,
K    Wassereintritt (Rückgewinnung),
L    Wasseraustritt (Rückgewinnung),
M    Sonderkühlwassereintritt, und
N    Sonderkühlwasseraustritt.

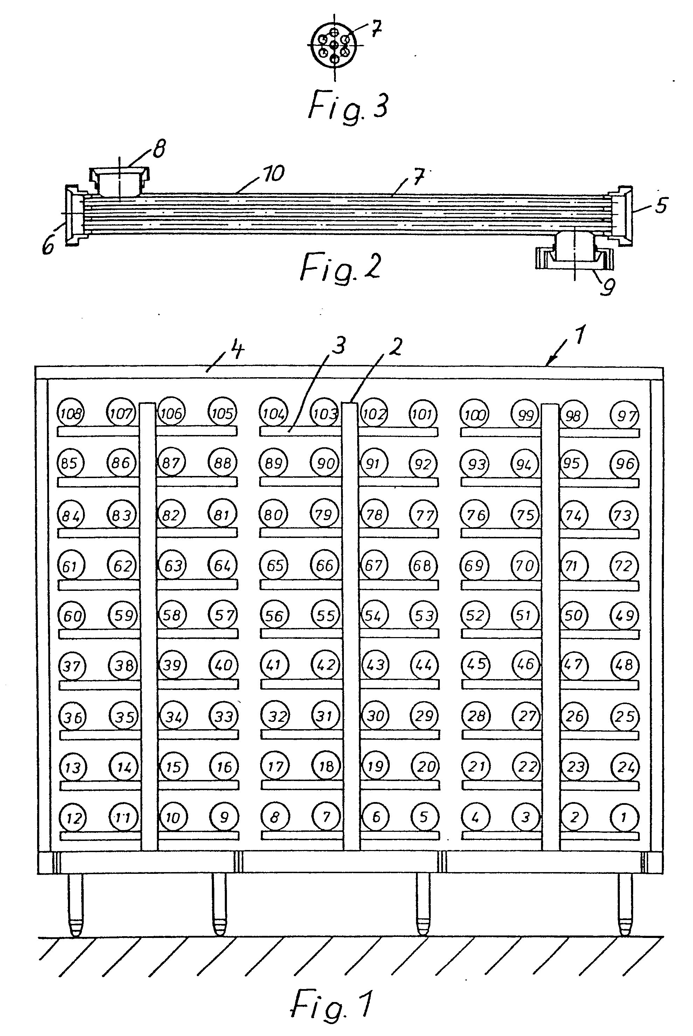

Der Wärmetauscher gemäss Fig. 1 mit seinen WTE
1 bis WTE 108 bildet eine Batterie, in der die WTE in
Reihen über- und nebeneinander angeordnet und zusammengefasst sind. Dabei sind die WTE in Gruppen
zu je 36 angeordnet und auf Gestellen aus vertikalen
Stützen 2 und horizontalen Streben 3 abgestützt. Eine Kapselung 4 umschliesst die Batterie aus WTE mit
abnehmbaren Wandungsteilen.

Jede WTE (vgl. Fig. 2 bis 6) weist zwischen ihrem
Einlass 5 und ihrem Auslass 6 für das Produkt ein
Rohrbündel mit sieben Rohren 7 sowie einen jeweils
das Wärmetauschermedium führenden, das Rohrbündel koaxial umgebenden, endseitig mit radialen
Ein- und Auslässen 8, 9 versehenen zylindrischen
Aussenmantel 10 auf. Die Rohre 7 des Rohrbündels
sind endseitig in Abschlussplatten 11, 12 dichtend
gehalten, und die Abschlussplatten 11, 12 sind ihrerseits an ihrem Umfang mit den Endbereichen des
Aussenmantels 10 dichtend verbunden. Vorzugsweise sind dabei die Rohre 7 mit den Abschlussplatten 11, 12 und diese mit dem Aussenmantel 10 verschweisst, um Betriebsdrücke in der Grössenordnung von etwa 50 bar oder darüber zuzulassen. Jeweils aussenseitig vor den Abschlussplatten 11, 12 ist eine Verteil- bzw. eine Sammelkammer 13 bzw. 14 in einem mit einer Überwurfmutter 15 für den Anschluss einer Leitung 16, 17 versehenen, den Ein- bzw. Auslass 5, 6 bildenden Kegelstutzen vorgesehen.

Die sieben Rohre 7 eines jeden Rohrbündels weisen einen lichten Innendurchmesser von etwa 12 mm und eine Länge von etwa 3 m auf, wobei bei entsprechender Länge der Aussenmantel einen lichten Durchmesser von etwa 49 mm besitzt. Diese Abmessungen haben sich herstellungstechnisch durch die Verwendung von Normrohren von 6 m Länge und deren Halbierung sowie wärmeübergangstechnisch als besonders günstig erwiesen, da die Wärmeübergangsfläche in einem sehr günstigen Verhältnis zum jeweils durchströmbaren Volumen der Strömungskanäle steht. Bei einer bevorzugten Strömungsgeschwindigkeit für das Produkt im Bereich von etwa 1,6 bis 2,2 m/s erbringt 1 m einer WTE derartiger Ausbildungen einen Wärmeübergang Q, für den man bei gleichem $\triangle$t eine Länge von 3 m eines Triplexrohres eines Rohrserpentinenaustauschers benötigt.

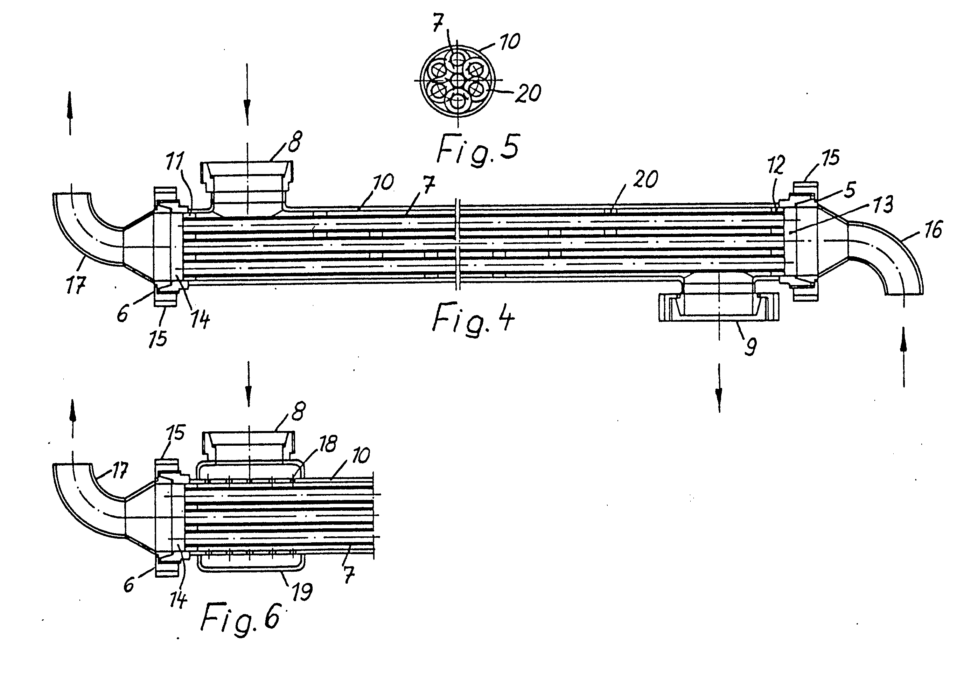

Dem Einlass für das Wärmetauschermedium kann ein dieses aus seiner radialen Eintrittsrichtung in eine axiale Durchflussrichtung umlenkendes, nicht näher dargestelltes Leitblech oder dgl. zugeordnet sein, um Temperaturspitzen im Bereich der gleichseitigen Enden der Rohre 7 zu vermeiden. Der Aussenmantel 10 von mit Dampf betriebenen WTE kann (Fig. 6) im Bereich seines Einlassendes 8 mit Perforationen 18 versehen und der perforierte Bereich von einem seinerseits mit dem Einlass 8 versehenen Einlassverteilerkanal 19 umgeben sein. Auch diese Ausgestaltung dient dazu, Temperaturspitzen in den gleichseitigen Endbereichen der Rohre 7 zu vermeiden.

Die Rohre 7 des Rohrbündels sind gegeneinander und gegenüber dem Aussenmantel 10 durch Distanzglieder 20 fixiert. Diese Distanzglieder 20 sind zweckmässig von geschlitzten, auf die Rohre 7 des Rohrbündels aufgesetzten Distanzringen gebildet, die jeweils den Abstand zu benachbarten Rohren 7 und zum Aussenmantel 10 überbrücken. Dabei sind die Distanzglieder 20 axial zueinander in Abständen versetzt auf einer gedachten Wendellinie verteilt im zentralen Bereich der WTE angeordnet, so dass sie nicht nur den freien Durchfluss des Wärmetauschermediums nicht nennenswert stören, sondern im Gegenteil der Strömung des Wärmetauschermediums eine kreisende Bewegung um die Längsmittelachse der WTE vermitteln. Hierdurch wird der Wärmeübergang zusätzlich verbessert.

Als Material für die Teile der WTE und die Verbindungsleitungen 16, 17 kommen V 4 A-Stähle oder dgl. hochfeste, korrosionssichere Materialien in Betracht.

Die vorbeschriebene Ausgestaltung der erfindungsgemässen Vorrichtung dient bevorzugt zu einer die Haltbarkeit erhöhenden Wärmebehandlung von Produkten wie Milch, wenngleich sie hierauf nicht beschränkt sind. Die überaus günstigen betriebs- und wärmetechnischen Eigenschaften machen die Vorrichtung durchaus für allgemeine Einsatzzwecke geeignet, bei denen durch Wärmeaustausch zwischen zwei Strömungsmediun diesen Temperatur/Zeit-Verlaufskurven komplizierterer und variabler Art vorzugeben sind.

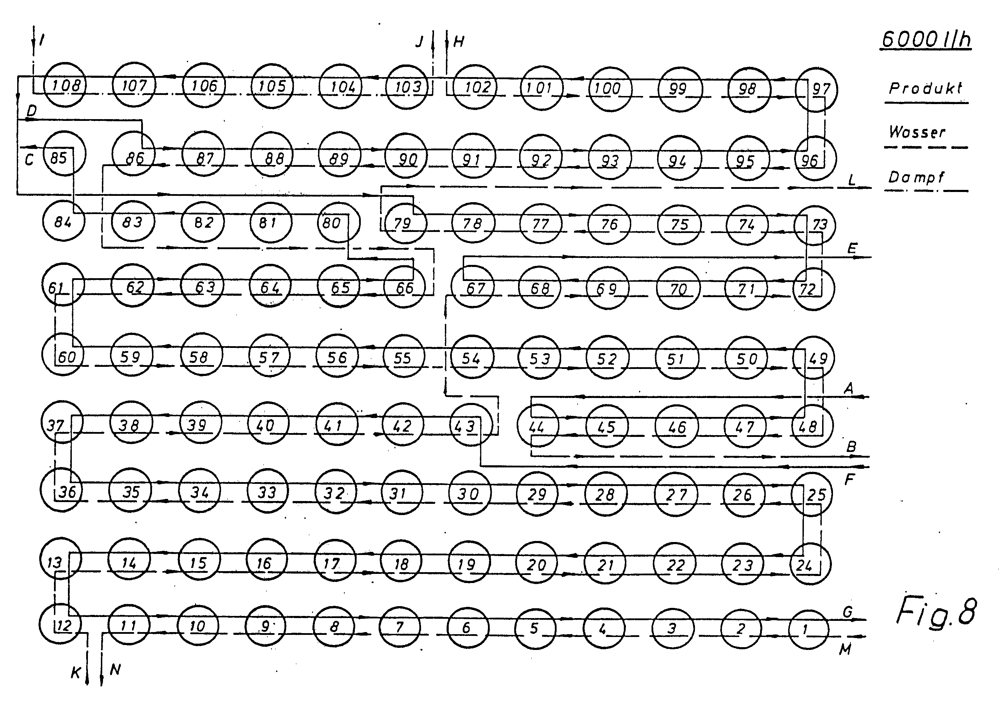

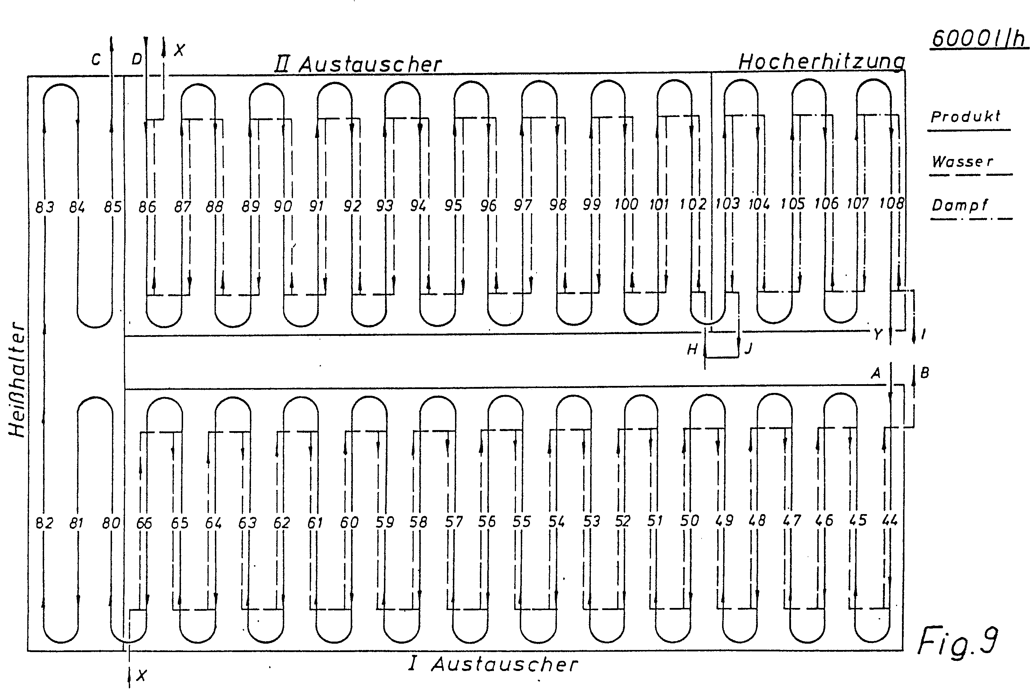

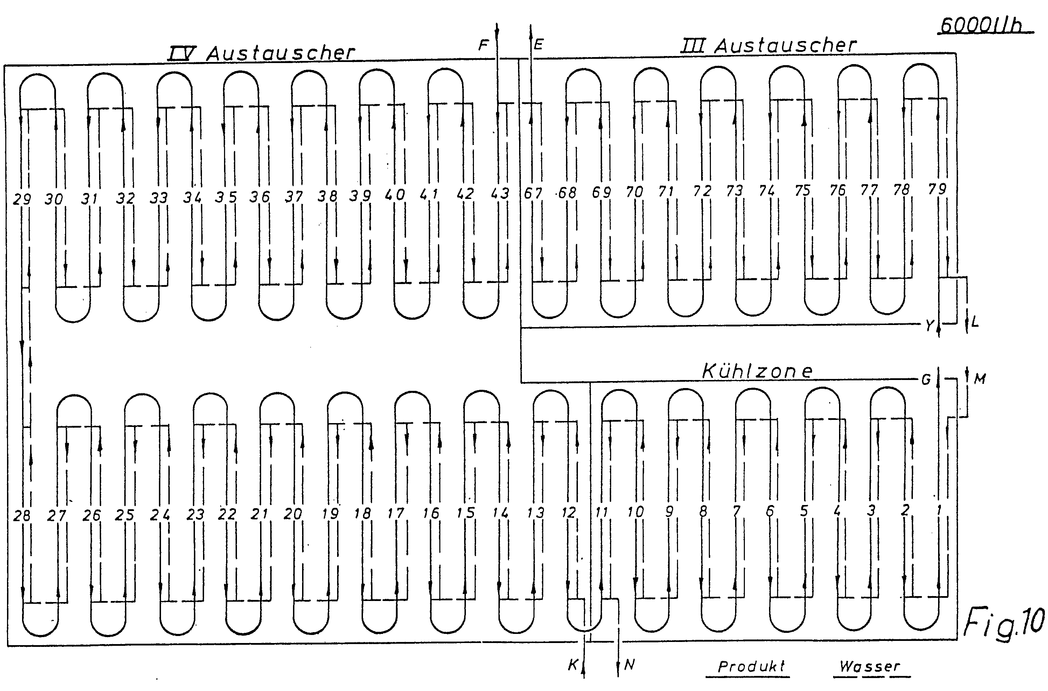

Die Fig. 7 zeigt in einem Temperatur/Zeit-Diagramm einen Kurvenverlauf für eine Ultrahocherhitzung von Milch zum Zwecke deren Haltbarmachung, wobei die Temperatur/Zeit-Eckpunkte mit Ziffern bezeichnet sind, welche die WTE bezeichnen, in denen die jeweilige Temperatur in der Milch erreicht wird. Die Milch tritt, wie den Fig. 8 bis 10 entnommen werden kann, in die WTE 44 ein und durchläuft die WTE 44 bis 66 unter Erwärmung auf ca. 85°. Diese WTE bilden eine erste in Reihe hintereinander geschaltete Gruppe, die in Fig. 9 als I Austauscher bezeichnet ist. Aus der WTE 66 geht die Milch in die WTE 80 über, die zusammen mit den WTE 82 bis 85 eine weitere Gruppe bildet, die in Fig. 9 als Heisshalter bezeichnet ist und die Aufgabe hat, ohne Wärmeaustausch die Milch für eine gewisse Zeit auf gleicher Temperatur zu halten. Aus der WTE 85 strömt die Milch bei C zu einer Homogenisiervorrichtung, von der sie zurückkommend bei D dann in die WTE 86 eintritt. Unter weiterer Erwärmung auf ca. 125° durchströmt die Milch nun die WTE 86 bis 102. Diese Gruppe von WTE ist in Fig. 9 mit II Austauscher bezeichnet. Unter Einschluss der Heisshaltung bilden die WTE-Gruppen I und II eine Vorwärmzone für die Milch, in der diese im Gegenstrom-Wärmeaustausch durch ein erstes Wärmeträgermedium Wasser erwärmt wird. Dieses Wasser tritt bei H in die WTE 102 ein, bei X aus der WTE 86 aus, umgeht die WTE 80 bis 85 und tritt bei X wieder in die WTE 66 ein, um schliesslich aus der WTE 44 bei B wieder aus der Vorwärmzone auszutreten.

Aus der WTE 102 tritt die Milch in die WTE 103 über, die zusammen mit den WTE 104 bis 108 eine weitere WTE-Gruppe bildet, die in Fig. 9 als Hocherhitzung bezeichnet ist. In den WTE 103 bis 108 erfährt die Milch eine Erwärmung auf ca. 140° und damit auf die Behandlungsendtemperatur, und zwar mit Hilfe eines zweiten Wärmeträgermediums, nämlich hier Dampf, der von einem nicht dargestellten Dampferzeuger kommend bei I in die WTE 108 ein- und aus der WTE 103 austritt. Nach seinem Austritt bei J wird der Dampf in das erste Wärmeträgermedium bei H eingespeist, vorzugsweise injiziert, um zugleich als hydraulischer Strömungsantrieb zu wirken.

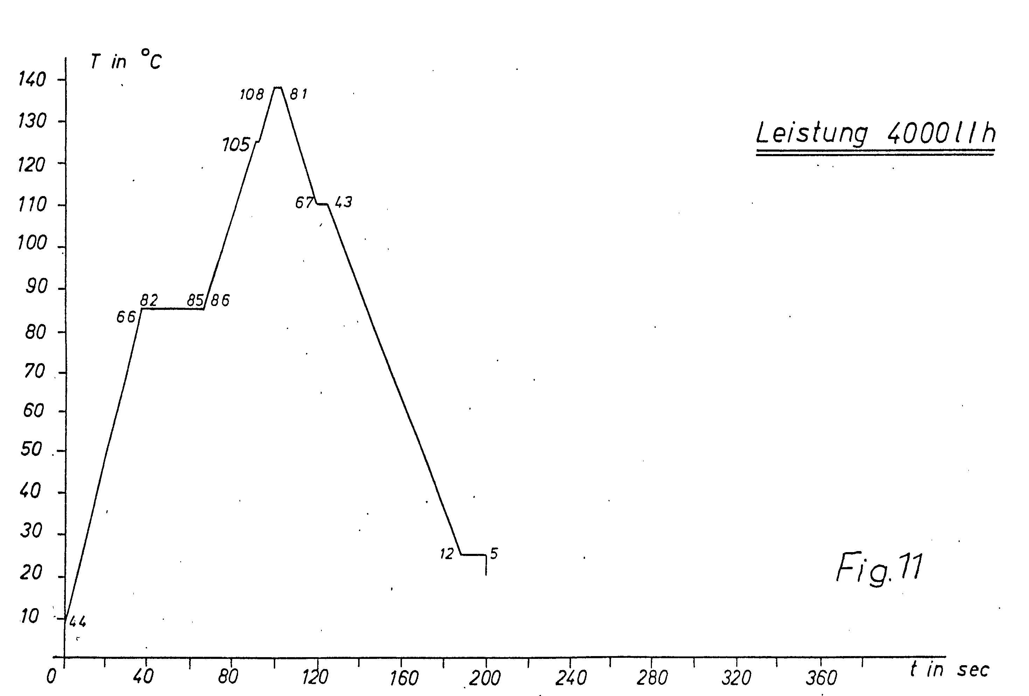

Nachdem die Milch für eine kurze Zeitspanne, z.B. 2 Sekunden, auf ihrer Endtemperatur verblieb, wird sie nun in einer sich anschliessenden Abkühlungszone mittels eines dritten Wärmeträgermediums, nämlich wieder Wasser, auf eine Weiterverwendungstemperatur abgekühlt. Zu diesem Zweck geht die bei Y aus der WTE 108 austretende Milch bei Y in die WTE 79 über, die Bestandteil einer weiteren Gruppe von WTE 67 bis 79 angehört, die in Fig. 10 als III Austauscher bezeichnet ist. Die auf eine Temperatur von etwa 110° abgekühlte Milch tritt bei E aus der WTE 67 aus, um zu einem Entgaser zu strömen, aus dem sie zurückkommend wieder bei F in die WTE 43 eintritt, die ihrerseits zu einer Gruppe WTE 12 bis 43 gehört, die in Fig. 10 mit IV Austauscher bezeichnet ist. Die WTE-Gruppen III und IV bilden gemeinsam die Abkühlungszone, nach deren Durchlaufen die Milch z.B. etwa Umgebungstemperatur von 18° besitzt und direkt abgefüllt werden könnte. Bei dem dargestellten Beispiel gemäss den Fig. 8 bis 10 durchläuft die Milch jedoch auch noch eine Abschreckungskühlzone, die von den WTE 1 bis 11 gebildet wird. Sodann verlässt die Milch den Wärmetauscher bei G, um nunmehr abgefüllt oder sonstwie weiterverwendet zu werden. Das dritte Wärmeträgermedium Wasser durchläuft die Abkühlungszone bei K mit Umgebungstemperatur in die WTE 12 eintretend und durchströmt dabei in ununterbrochener Folge die WTE 12 bis 43 und unmittelbar anschliessend die WTE 67 bis 79. Bei L tritt das durch das Produkt aufgewärmte Wasser aus der WTE 79 aus, um sogleich bei H wieder in die WTE 102 einzutreten, und dann die Gruppen II und I mit den WTE 102 bis 86 bzw. 66 bis 44 zu durchlaufen. Bei Verlassen der WTE 44 bei B hat das Wasser im wesentlichen wieder seine Umgebungstemperatur erreicht und wird nun bei K wieder in die WTE 12 zwecks Wärmerückgewinnung eingeführt. Dementsprechend bildet das Wasser das erste und das dritte Wärmeträgermedium, die somit in einem geschlossenen Kreislauf zirkulieren, wobei bei H die Einspeisung von Dampf als zweitem Wärmeträgermedium erfolgt. Die Abschreckungskühlzone ist in der Regel bei Milch nicht vonnöten, jedoch bei anderen Produkten, z.B. bei Sahne usw., die auch in gekühlter Form in den Handel gelangt, zweckdienlich. Für diese Abschreckungskühlzone wird ein Sonderkühlwasser, z.B. Eiswasser, oder ein sonst geeignetes viertes Wärmeträgermedium verwendet, das in einem gesonderten Kreislauf bei M in die WTE 1 eintritt und die WTE 11 bis N verlässt, um nach Durchlaufen eines Kühlaggregates wieder bei M zurückgeführt zu werden.

Wie die Fig. 8 bis 10 erkennen lassen, sind sämtliche WTE 1 bis 108 bei der auslegungsgemässen Maximaldurchsatzmenge von 6000 l/h in Betrieb. Die Leitungsverbindungen der WTE sind in Fig. 8 schematisch angedeutet und werden durch Rohrleitungen zwischen den jeweiligen Anschlüssen 5, 6 bzw. 8, 9 gebildet.

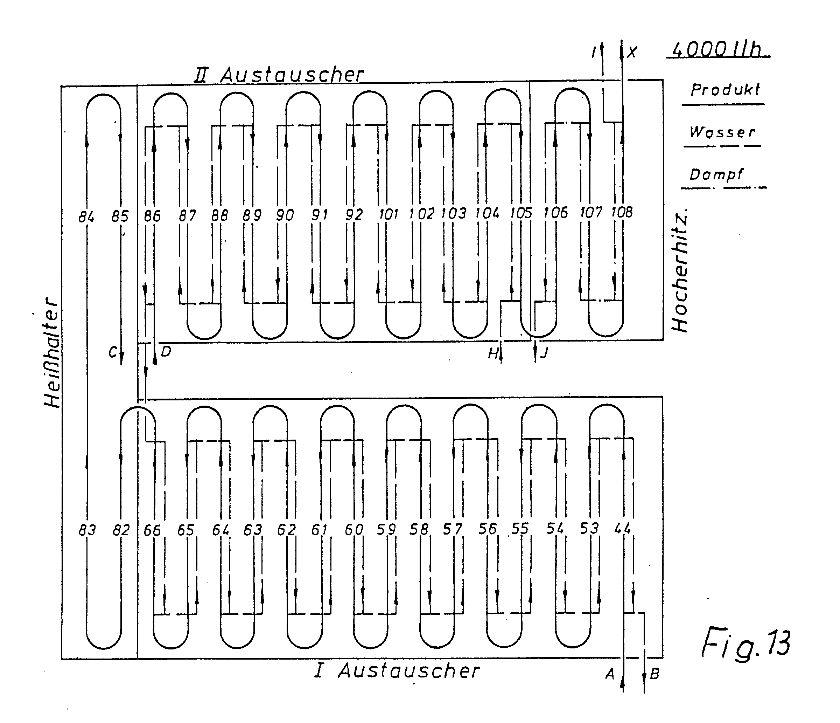

Die Fig. 11 bis 14 veranschaulichen einen Behandlungsablauf unter Verwendung des Wärmetauschers nach Fig. 1 mit einer Durchsatzleistung von 4000 l/h an wiederum Milch als Produkt, die ebenfalls einer Ultrahocherhitzung als Form der Wärmebehandlung zur Haltbarmachung zu unterwerfen ist, wobei ein der Fig. 7 entsprechender Temperatur/Zeit-Kurvenverlauf gegeben sein soll. Wie sich dabei aus den Fig. 12 bis 14, insbesondere jedoch der Fig. 12 ersehen lässt, werden hierbei lediglich 72 der 108 WTE eingesetzt, d.h. die in Fig. 1 rechte Gruppe von 36 WTE bleibt ausser Betrieb. Diese WTE können während des Behandlungsverfahrens z.B. gereinigt werden, sie können jedoch auch nach Reinigung und ähnlicher Betriebsvorbereitung gewissermassen als Sondergruppe für einen völlig unabhängigen Behandlungsvorgang parallellaufend eingesetzt werden, z.B. für einen Behandlungsvorgang, wie er in den Fig. 15 bis 17 bzw. 18 bis 20 veranschaulicht ist. Dementsprechend ist die Möglichkeit eröffnet, gleichzeitig unterschiedliche Produkte unterschiedlichen Wärmebehandlungen zu unterziehen.

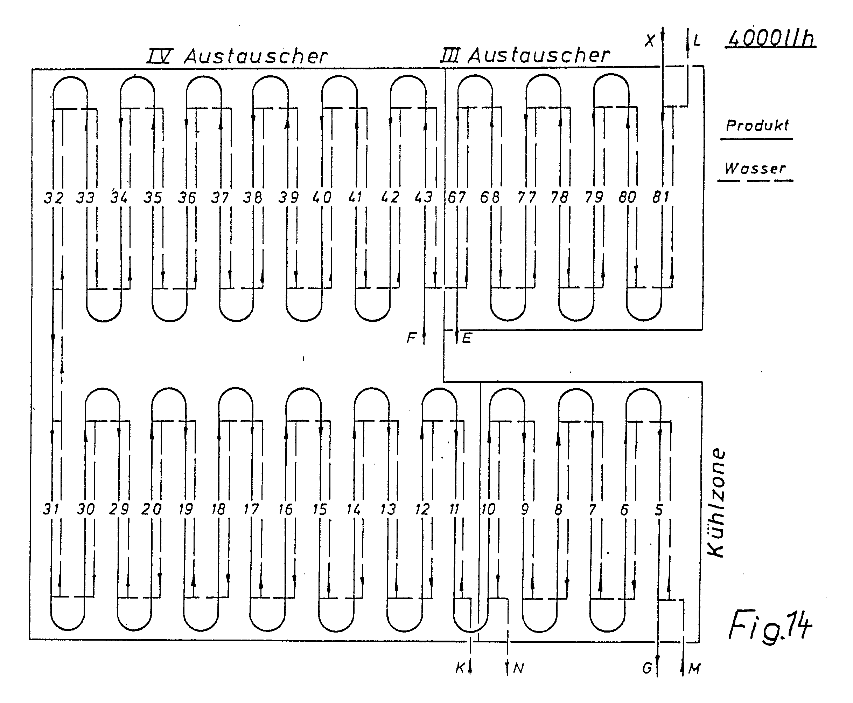

Angesichts der in den Fig. 12 bis 14 dargestellten Leitungsverbindungen bzw. Strömungsverknüpfungen erscheint eine nochmalige, ins einzelne gehende Beschreibung der Strömungsführungen der Medien entbehrlich. Ersichtlich bilden die WTE 44 bis 66 wieder eine als I Austauscher bezeichnete erste Gruppe von hintereinander geschalteten WTE, die Bestandteil der Vorwärmzone ist, welche die WTE 82 bis 85 als Heisshalter und die WTE 86 bis 105 als weitere, mit II Austauscher bezeichnete Gruppe umfasst. Die Hochtemperaturzone wird von den WTE 106 bis 108 gebildet. In der Abkühlungszone bilden die WTE 81 bis 67 eine mit III Austauscher bezeichnete erste Gruppe, an die sich eine als IV Austauscher bezeichnete zweite Gruppe von WTE 43 bis 11 anschliesst. Zu bemerken ist, dass in dieser Gruppe die WTE 28 bis 21 nicht enthalten sind. d.h. ein direkter Übergang von der WTE 29 auf die WTE 20 erfolgt. Die Abschreckungskühlzone, in Fig. 14 mit Kühlzone bezeichnet, umfasst die WTE 5 bis 10.

Die Fig. 15 bis 17 veranschaulichen einen Betrieb des Wärmeaustauschers nach Fig. 1 mit einer auf 2000 l/h reduzierten Durchsatzleistung bei wiederum Milch als Produkt und einer den Fig. 7 bis 11 entsprechenden Temperatur/Zeit-Kurve. Dieses Beispiel veranschaulicht wie schon das Beispiel nach Fig. 11 bis 14 die ausserordentliche Leistungsvariabilität in bezug auf die Durchsatzleistung. Wie der Fig. 16 am leichtesten entnommen werden kann, finden lediglich die in Fig. 1 in der linken Gruppe enthaltenen 36 WTE Verwendung, während die in der mittleren und/oder der rechten Gruppe von 36 WTE enthaltenen Einheiten inspiziert und/oder gereinigt bzw. gemeinsam oder getrennt für gesonderte Wärmebehandlungen herangezogen werden können. Dementsprechend wird deutlich, dass die Vorrichtung in der Lage ist, drei parallele Wärmebehandlungen von wahlweise unterschiedlichen Produkten mit jeweils unterschiedlichen Behandlungskriterien durchzuführen. Bei noch weitergehender Verringerung der Durchsatzleistung für zu behandelnde Produkte kann der Wärmetauscher auch noch in wesentlich kleinere Gruppen von zusammenwirkenden WTE unterteilt werden, so dass ohne weiteres eine noch grössere Zahl von Produkten unter jeweils speziell angepassten Bedingungen einer Wärmebehandlung unterzogen werden kann.

Die WTE 57 bis 64 bilden eine wieder als I Austauscher bezeichnete erste Gruppe, die zusammen mit den WTE 84 und 85 für die Heisshaltung und mit den WTE 86, 87, 88 und 105 als weiterer, wiederum als II Austauscher bezeichneten Gruppe die Vorwärmzone bilden. Die Hochtemperaturzone wird lediglich noch von den WTE 107 und 108 gebildet, während die WTE 83 bis 81 eine erste, mit III Austauscher bezeichnete WTE-Gruppe der Abkühlungszone bilden, zu der auch noch eine mit IV Austauscher bezeichnete Gruppe gehört, welche die WTE 40 bis 33 und 16 bis 12 umfasst. Die Abschreckungskühlzone wird hier lediglich noch durch die WTE 11 bis 9 gebildet. Die Wärmeträgermedien und ihre Führung entsprechen denen bzw. der bei den vorhergehenden Beispielen.

Während die vorhergehenden Beispiele die Variationsmöglichkeiten in der Durchsatzleistung beispielhaft verdeutlichen, zeigen nun die Fig. 18 bis 20 als Beispiel eine Variation im Temperatur/Zeit-Kurvenverlauf bei im Vergleich zu Fig. 15 bis 17 unveränderter Durchsatzleistung von 2000 l/h. Die Fig. 18 lässt erkennen, dass bei Beibehaltung im wesentlichen gleicher Temperaturanlaufpunkte die Verfahrenszeit verlängert wurde, wie das z.B. bei einer Milch anderer Konsistenz wünschenswert sein könnte. Es versteht sich jedoch, dass anstelle einer Verlängerung der Verfahrenszeit auch deren Verkürzung herbeigeführt werden könnte und dass dabei zugleich oder unabhängig davon auch die Temperaturanlaufpunkte anders gewählt werden können. Wie ohne weiteres den Fig. 18 bis 20 entnommen werden kann, wurde die Gruppierung und Zuordnung zu einer Vorwärm-, einer Hochtemperatur- und einer Abkühlzone prinzipiell beibehalten und nur die Zuordnung der jeweiligen WTE zu den benötigten Gruppen verändert. Auch der Strömungsverlauf und die verwendeten Wärmeträgermedien bleiben prinzipiell gleich, wenngleich unter Berücksichtigung der andersartigen WTE-Gruppierungen. Von einer näheren Erläuterung kann wohl angesichts der Aussagekraft der Zeichnungen Abstand genommen werden.

Die Herstellung der Strömungsverknüpfungen zwischen den WTE zur Erzielung eines jeweils gewünschten Verlaufs der Temperatur/Zeit-Kurve kann jeweils durch entsprechende Rohrleitungsverbindungen hergestellt werden, die jeweils als einzelne Verbindungsstücke die WTE verbinden. In diesem Falle bedürfen Veränderungen in der Strömungsführung und in der Gruppierung mehr oder weniger starker Veränderungen in der Anordnung und Anbringung der Verbindungsleitungen. Statt dessen ist es aber auch möglich, ein System von Leitungsverbindungen vorzusehen, das mit Hilfe von eingeschalteten Mehrwegeventilen die jeweils gewünschten Strömungsverbindungen zur Erzielung eines gewünschten Fliessschemas ermöglichen, ohne dass Leitungsverbindungen abgeschraubt und neu erstellt werden. Dies kann zumindest soweit vorangetrieben werden, dass der Übergang von Durchsatzleistungen von z.B. 6000 auf 4000 bzw. von 4000 auf 2000 l/h und umgekehrt allein mittels entsprechender Ventileinstellungen herbeiführbar ist.

Erwähnt sei noch, dass die Vorrichtung infolge ihrer ungewöhnlichen Betriebsvariabilität zwar besonders gut für Wärmebehandlungsverfahren mit komplizierten Temperatur/Zeit-Kurvenverläufen einsetzbar ist, dass jedoch auch die Möglichkeit besteht, sie z.B. in der chemischen oder der pharmazeutischen Industrie einzusetzen, um z.B. durch Wärme chemische Flüssigkeiten oder vor einer Verwendung in Medikamenten der Keimabtötung zu unterwerfende Flüssigkeiten usw. zu behandeln, wobei sich ebenso komplizierte wie einfache Temperatur/Zeit-Kurvenverläufe einstellen lassen.

Statt Ultrahocherhitzung im vorbeschriebenen Sinne kann auch ein Pasteurisierungs- oder ein normaler Sterilisierungsvorgang ausgeführt werden.

**Patentansprüche**

1. Vorrichtung für eine die Haltbarkeit erhöhende Wärmebehandlung, insbesondere Ultrahocherhitzung, von Keime enthaltenden Produkten, mit Wärmetauschern, in denen das Produkt in indirektem Gegenstrom-Wärmeaustausch mit einem Wärmeträgermedium unter Wärmerückgewinnung erwärmt und anschliessend abgekühlt wird, wobei die Wärmetauscher fortlaufend durchflossene Strömungskanäle für das Produkt und in den Wärmeaustauschbereichen fortlaufend in Gegenrichtung durchflossene Strömungskanäle für das Wärmeträgermedium aufweisen und jeweils durch Leitungen für das Produkt und solche für das Wärmeträgermedium untereinander verbunden sind, dadurch gekennzeichnet, dass sämtliche Wärmetauscher zu einer räumlichen Baueinheit zusammengefasst sind, die aus einer Vielzahl von gesonderten, untereinander gleichen, als Batterie reihenweise parallel über- und nebeneinander angeordneten Wärmetauscherteileinheiten (WTE 1-108) besteht, die als an sich bekannte Rohrbündeltauscher ausgebildet und durch austauschbare Leitungen (z.B. 16, 17) in beliebig wählbarer Zahl und Aufeinanderfolge strömungsmässig zu einer Funktionseinheit zusammenschaltbar sind.

2. Vorrichtung nach Anspruch 1, dadurch gekennzeichnet, dass jede Wärmetauscherteileinheit ein zwischen ihren axialen Ein- und Auslässen (5, 6) von dem zu behandelnden Produkt durchströmbares Rohrbündel von sieben Rohren mit einem lichten Innendurchmesser von etwa 12 mm und einer Länge von etwa 3 m sowie einen das Wärmetauschermedium führenden, das Rohrbündel koaxial umgebenden, endseitig mit radialen Ein- und Auslässen versehenen Aussenmantel (10) mit einem lichten Durchmesser von etwa 49 mm umfasst.

3. Vorrichtung nach Anspruch 2, dadurch gekennzeichnet, dass die Rohre (7) des Rohrbündels gegeneinander und gegenüber dem Aussenmantel (10) durch Distanzglieder (20) fixiert sind, die von geschlitzten, auf die Rohre (7) des Rohrbündels aufgesetzten Distanzringen gebildet sind, welche jeweils den Abstand zu benachbarten Rohren und zum Aussenmantel überbrücken und axial zueinander in Abständen versetzt auf einer gedachten Wendellinie verteilt im zentralen Bereich jeder Wärmetauscherteileinheit angeordnet sind.

**Claims**

1. An apparatus for heat-treating, particularly by ultra-high temperature heating, of germs-containing products to enhance their conservation, having heat exchangers in which the product is heated, with the recovery of heat, in indirect counter-current heat exchange with a heat-carrier medium, and is subsequently cooled, wherein the heat exchangers comprise flow passages for the product, which are flowed through continuously, and flow passages for the heat carrier medium, which are flowed through continuously in the opposite direction in the heat exchange regions, and are each connected to one another by pipelines for the product and pipelines for the heat carrier medium, characterised in that all the heat exchangers are combined to form a three-dimensional structural unit which consists of a plurality of separated component heat exchanger units (component heat exchanger units 1-108) which are all alike and are disposed parallel above and beside one another, in rows, as a battery, and wich are constructed in the form of heat exchangers of the nest of tubes type, known per se, and can be interconnected with regard to flow in any aselective number and sequence, by exchangeable pipelines (for example 16, 17) to form an operational unit.

2. An apparatus as claimed in claim 1, characterised in that each component heat exchanger unit comprises a nest of tubes of seven tubes with an internal diameter of about 12 mm and a length of about 3 m, through which nest of tubes the product to be treated can flow between its axial inlets and outlets (5, 6) as well as an outer jacket (10) with an internal diameter of about 49 mm which conveys the heat exchange medium, surrounds the nest of tubes coaxially and is provided at the ends with radial inlets and outlets.

3. An apparatus as claimed in claim 2, characterised in that the tubes (7) of the nest of tubes are fixed in relation to one another and in relation to the outer jacket (10) by spacing members (20) which are formed by slit spacer rings which are placed on the tubes (7) of the nest of tubes and which bridge the distance to adjacent tubes and to the outer jacket in each case and are disposed along an imaginary helical line, staggered axially in relation to one another, with spacing, in the central region of each component heat exchanger unit.

**Revendications**

1. Dispositif pour le traitement thermique notamment le chauffage à ultra haute température de produits contenant des germes, afin d'améliorer leur conservation, en utilisant des échangeurs thermiques dans lesquels le produit est échauffé en échange thermique à contre courant avec un fluide caloporteur avec récupération de chaleur, puis est ensuite refroidi, les échangeurs thermiques comportant des canaux d'écoulement parcourus de façon continue par le produit, et dans les zones d'échange thermique, des canaux d'écoulement parcourus de façon continue à contre-courant par le fluide caloporteur, et ces échangeurs thermiques étant reliés respectivement entre eux par des canalisations pour le produit et des canalisations pour le fluide caloporteur, dispositif caractérisé en ce que l'ensemble des échangeurs thermiques est rassemblé en une unité constitutive constituée d'un grand nombre d'unités partielles d'échangeur thermique (WTE 1 à 108) séparées, identiques entre elles, disposées sous forme de batterie en rangées parallèles superposées, et juxtaposées, et qui revêtent la forme d'échangeurs à faisceau de tubes connus en soi, et sont susceptibles d'être réunies selon un nombre et une succession choisis de façon quelconque, par des canalisations permutables (par exemple 16, 17), pour constituer une unité fonctionnelle du point de vue de l'écoulement.

2. Dispositif selon revendication 1, caractérisé en ce que chaque unité partielle d'échangeur thermique comprend entre son entrée axiale et sa sortie axiale (5, 6) un faisceau de tubes parcourus par le produit à traiter et constitué de sept tubes (7) avec un diamètre interne libre d'environ 12 mm et une longueur d'environ 3 mètres, ainsi qu'une enveloppe externe (10) avec un diamètre libre d'environ 49 mm, qui canalise le fluide échangeur de chaleur en entourant coaxialement le faisceau de tubes et en étant munie à ses extrémités d'une entrée radiale et d'une sortie radiale.

3. Dispositif selon revendication 2, caractérisé en ce que les tubes (7) du faisceau de tubes sont fixés entre eux par rapport à l'enveloppe externe (10) par des entretoises (20) constituées d'anneaux entretoises fendus placés sur les tubes (7) du faisceau de tubes, et qui maintiennent respectivement la distance par rapport aux tubes voisins et par rapport à l'enveloppe externe et sont répartis sur une hélice imaginaire en étant décalés axialement à intervalles les uns des autres, en étant disposés dans la zone centrale de chaque unité partielle d'échangeur thermique.

Fig. 3

Fig. 2

Fig. 1

Fig. 5

Fig. 4

Fig. 6

0 036 124

Fig. 7

Leistung 6000 l/h

0 036 124

6000 l/h

Produkt ——————

Wasser — — — —

Dampf — · — · —

Fig.8

0 036 124

60001/h

II Austauscher  Hocherhitzung

Produkt
Wasser
Dampf

0 036 124

Fig.9

Heißhalter

I Austauscher

Fig.10

Fig. 11

Leistung 4000 l/h

Fig.12

0 036 124

Fig. 13

Fig.14

Leistung 2000 l/h

Fig. 15

0 036 124

Fig. 16

2000 l/h
Produkt
Wasser
Dampf

Fig.17

Fig.18

Fig. 19

2000 l/h

Produkt

Wasser

Dampf

0 036 124

37

Fig. 20